# EUROPEAN PATENT SPECIFICATION

(11) **EP 1 405 212 B1**
(45) Date of publication and mention of the grant of the patent: **18.12.2013**
(21) Application number: 01950739.1
(22) Date of filing: 29.06.2001
(51) Int. Cl.: G06F 17/30

(54) **METHOD AND SYSTEM FOR INDEXING AND SEARCHING TIMED MEDIA INFORMATION BASED UPON RELEVANCE INTERVALS**
VERFAHREN UND SYSTEM ZUM INDIZIEREN UND DURCHSUCHEN ZEITLICH GESTEUERTER MEDIENINFORMATIONEN AUF DER GRUNDLAGE VON RELEVANZINTERVALLEN
PROCEDE ET SYSTEME DE REPERAGE ET DE RECHERCHE D'INFORMATIONS MINUTEES DANS DES PROGRAMMES SE BASANT SUR LES INTERVALLES DE PERTINENCE

(30) Priority: 06.07.2000 US 611316
(43) Date of publication of application: 07.04.2004
(73) Proprietor: Streamsage, Inc., Washington, DC 20011 (US)
(72) Inventor: SIBLEY, Tim, V., Washington, DC 20011 (US); MORTON, Michael, Scott, Washington, DC 20011 (US)
(74) Representative: Wallin, Nicholas James
(86) International application number: PCT/US2001/020894
(87) International publication number: WO 2002/005135

(56) References cited:
- US-A- 5 521 841
- SMITH J R ET AL: "AN IMAGE AND VIDEO SEARCH ENGINE FOR THE WORLD-WIDE WEB" STORAGE AND RETRIEVAL FOR IMAGE AND VIDEO DATABASES 5. SAN JOSE, FEB. 13 - 14, 1997, PROCEEDINGS OF SPIE, BELLINGHAM, SPIE, US, vol. 3022, 13 February 1997 (1997-02-13), pages 84-95, XP000742373 ISBN: 0-8194-2433-1
- MUKHERJEA S ET AL: "Towards a multimedia World-Wide Web information retrieval engine" COMPUTER NETWORKS AND ISDN SYSTEMS, NORTH HOLLAND PUBLISHING. AMSTERDAM, NL, vol. 29, no. 8-13, 1 September 1997 (1997-09-01), pages 1181-1191, XP004095315 ISSN: 0169-7552

## Description

### FIELD OF THE INVENTION

The present invention relates to a method and system for indexing and searching timed media based upon relevance intervals. More particularly, the present invention relates to a method and system for indexing and searching timed media based upon relevance intervals that returns portions of timed media files that are selected as specifically relevant to the given information representations, thereby both eliminating the need for a manual determination of the relevance and avoiding missing relevant portions. The timed media includes streaming audio, streaming video, timed HTML, animations such as vector-based graphics, slide shows, other timed media, and combinations thereof. The method and system of the present invention determines the relevant portion of the media around each occurrence of the information representation rather than requiring the user to perform such functions.

### BACKGROUND OF THE INVENTION

The rapid growth of the Internet encompasses rapid growth in the use of real-time, digital timed media such as Web-based conferencing, e-learning, presentations, events, radio broadcasts, and other broadcasting. Such new types of media are becoming commonplace methods of communication. As the use of timed media communication tools continues to gain popularity, storehouses of timed media files are growing to meet this new demand. Organizations require tools capable of capturing, indexing, and retrieving the massive amount of information contained within such mediums of communication.

Traditionally, search engines create a large table that is indexed by words, phrases, or other information such as hyperlinks. Each word or phrase points to documents that contain it. The pointing is rated by a relevance that is calculated by some algorithm, typically including information such as the frequency with which the word or phrase appears and whether it occurs in the title, keywords, etc. Advanced search engines augment the foregoing system by adding the capability to check synonyms or by letting the user indicate the intended definition of the word in question, either by choosing it manually or by entering a natural language query. Other functions are plentiful, such as putting the words searched for in bold in an HTML document or organizing the returned results into customized folders, as is done by Northern Lights.

While the foregoing search engines are excellent models for static documents, their usefulness is minimal for timed media, such as an audio or video file. Due to the unidirectional movement of human consciousness through space-time, a user cannot simultaneously experience more than one point of a timed media file. As a result, the ability of the user to find a relevant portion within a timed media file, once they have found the file itself, is greatly constrained.

Therefor, a useful timed media search and retrieval system must not only assist the user in locating a relevant file, but must also assist the user in locating the relevant portions of that file.

Due to the time-dependent nature of viewing such timed media files, locating relevant information contained within timed media files is even more complicated than locating information contained in static text-based files. When searching static text-based files, a user can review the text by seeking occurrences of search terms from within any text viewing application. In contrast, when searching timed media files, a user cannot judge the detailed content of the file any faster than by playing the file through from beginning to end. If only a small portion of a video is of interest to a particular viewer, for example, it is unlikely he or she will identify that portion without viewing the entire file.

Attempts have been made to provide search capability for timed media files. Conventional timed media search systems attempt to solve the foregoing problem by segmenting the timed media files into short sections. The precise length of such sections or scenes is usually determined either automatically by sudden visual changes in the timed media, such as those caused by an edit or cut, or manually by a human editor. Each scene is then indexed as if it were a separate document, usually with the help of manually entered keywords. The user can visually skim a list of representative images from the scenes that compose the timed media file, thereby utilizing the visual information inherent in the timed media file itself to select an appropriate starting point for viewing the file. Some timed media search systems also use speech recognition to display a portion of any spoken text from a given scene.

The foregoing method is particularly useful in the field of digital video editing and production processes, as a sequential storyboard is often an ideal presentation of the media. Unfortunately, such an approach is not nearly as useful in the context of factual information searching and retrieval. Users of factual information searching systems are often less interested in, the visual information, and a great deal of the factual information-centered timed media content created specifically for the Internet contains little such visual information.

Other conventional timed media systems do not divide a timed media file into segments. Such systems index the precise time at which a particular term is spoken. A user can then search for a particular term and use the search results to begin replaying the timed media file from the precise occurrence of the search term. While the foregoing method guarantees that a user can locate the occurrence of the search term, the user still must manually determine how much of the timed media file, after or before the occurrence of the search term, is relevant. Consequently, determining the extent to which the timed media file or particular portions of the timed media file are relevant still requires a significant amount of manual navigation and review of non-relevant content.

A further problem exists because of the rigid nature of the aforementioned systems. An important technique for solving the problem of creating a useful timed media search index is to make assumptions about the timed media based upon its origin or intended use. For example, timed media presentations from different industries should use different speech recognition lexicons, and a multi-speaker video conference might be segmented using different processes than a single-speaker speech. The aforementioned systems are fairly limited solutions in that they do not allow the user to customize the processes involved in creating or using a search index. As a result, such systems do not even optimally use their own technologies for indexing particular types of video.

US 5,521,841 discloses a method for representing contacts of a video sequence for allowing a user to rapidly view a video sequence in order to find a particular desired point within the sequence and/or to decide whether the contacts of a video sequence are relevant to a user.

Smith J R et al: "An Image and Video Search Engine for the World-Wide Web" Storage and Retrieval for Image and Video Databases 5. San Jose, Feb. 13-14, 1997, Proceedings of Spie, Bellingham, Spie, US, Vol. 3022, 13 February 1997 (1997-02-13), pages 84-95 discloses a visual information system prototype for searching for images and videos on the word wide web.

Leonidas Kontothanassis et al: "Design, Implementation and Analysis of a Multimedia Indexing and Delivery Server", Cambridge Research Laboratory, Technical Report Series, August 1999 discloses a system that allows indexing and serving of multimedia documents over the internet.

### SUMMARY OF THE INVENTION

Presently, no timed media indexing system exists that is tailored to the needs of the general business community. While digital video search tools exist that have been designed for television and video production industries, such video search tools are designed to manage and index content according to visual and editorial cues. These tools cannot manage the timed media files according to information presented in the files, or by the intended use of the documents. As a result, such tools are ill suited to the needs of the general business community.

As the nascent Internet emerges to become a more mature medium for communication, the content of the Internet is shifting from static, text-based documents to include a rapidly increasing number of interactive, timed media files. To date, the greatest limitations on the use of timed media files have been insufficient broadband capacity and immature compression technology. Already, these hurdles are being surmounted and timed media is gaining prominence in a number of diverse fields, such as entertainment, e-learning, knowledge management, communication, and medicine.

Presently, timed media is typically distributed through timed media content providers. Timed media content providers require tools that can effectively index, search, and retrieve information stored in timed media documents. These tools must be capable of cataloguing, organizing, and accessing the potentially overwhelming glut of timed media being provided via the Internet. More specifically, given the length of many timed media files, a tool is needed that can immediately provide access to relevant segments within a longer timed media file.

While timed media content providers are presently the primary users of timed media, the use of timed media is increasing in specialized applications such as e-learning and knowledge management. The e-learning industry has been an early adopter of timed media technology due to the need to communicate information to users through a variety of mediums. The ability to both provide a new use for the e-learning timed media files outside the e-learning environment and customize e-learning sessions is desirable. Current e-learning search tools are orientated towards retrieving general educational topics rather than the information contained within the program, and thus are incapable of accommodating new purposes for the timed media information.

While not an early adopter, the knowledge management industry is rapidly moving to incorporate timed media collaboration capabilities into its products. As a result of the increasing volume of timed media files within organizations' knowledge bases, these organizations will require a system capable of effectively managing the information contained in timed media files. Currently, this need remains unmet.

The above noted deficiencies and other deficiencies of the prior art are addressed by the present invention, which is directed to a method for searching and retrieving information from timed media files based upon relevance intervals. The method and system for searching and retrieving this information is based upon relevance intervals so that it returns a portion of a timed media file that is selected for specific relevance to the given information representations, thereby both eliminating the need for a manual determination of the relevance and avoiding missing relevant portions. The timed media includes streaming audio, streaming video, timed HTML, animations such as vector-based graphics, slide shows, other timed media, and combinations thereof.

An object of the present invention is to provide a method for searching and retrieving timed media files that allows the user to locate relevant documents and the relevant portions of those documents.

Another object of the present invention is to provide a method for searching and retrieving timed media files that returns relevance intervals, which are not individual documents, but rather pointers to portions of timed media files.

Yet another object of the present invention is to provide a method for searching and retrieving timed media files that is customizable by the user. A user can customize each portion of the system that performs a calculation.

Still another object of the present invention is to provide a method for searching and retrieving timed media files that returns a portion of a timed media file that is selected to be specifically relevant to the given information representations, thereby eliminating the need for manual determination of relevance.

Another object of the present invention is to provide a method for searching and retrieving timed media files in which a raw data index is developed from timed media files.

Yet another object of the present invention is to provide a method for searching and retrieving timed media files in which the raw data index includes information such as the information representation and the time-code during which the information representation occurs in the file.

Still another object of the present invention is to provide a method for searching and retrieving timed media files which returns relevance intervals and associated relevance magnitudes for each query.

Another object of the present invention is to provide a method for searching and retrieving timed media files that creates segments that are customized for each query.

Yet another object of the present invention is to provide a method for searching and retrieving timed media files that, while returning relevance intervals, allows the user to navigate through the document as a whole as well as within the intervals.

Still another object of the present invention is to provide a method for searching and retrieving timed media files that, prior to receiving an query from a user, evaluates data extracted from timed media files to determine relevance intervals for information representations in the timed media files.

### BRIEF DESCRIPTION OF THE DRAWINGS

These and other attributes of the present invention will be described with respect to the following drawings in which:
**FIG. 1** is a flow chart showing an overview of the timed media indexing method according to the present invention;
**FIG. 2** is a flow chart showing an overview of the process of creating and returning search results to a user according to the present invention;
**FIG. 3** is a process chart showing the process of creating a search index and raw data index according to the present invention;
**FIG. 4** is a process chart showing the operation of the system of the present invention in response to a user-entered query;
**FIG. 5** is an input/output chart showing the inputs and outputs for the calculation of the relevance intervals according to the present invention;
**FIG. 6** is an architecture diagram illustrating the system architecture of the present invention;
**FIG. 7** is a block diagram showing the indexing aspect of the present invention;
**FIG. 8** is a block diagram showing the search aspect of the present invention;
**FIG. 9** is a block diagram showing the playback aspect of the present invention;
**FIG. 10** is a search display screen presented to a user when utilizing the present invention; and
**FIG. 11** is a results display screen presented to a user subsequent to a search request according to the present invention.

### DETAILED DESCRIPTION OF THE INVENTION

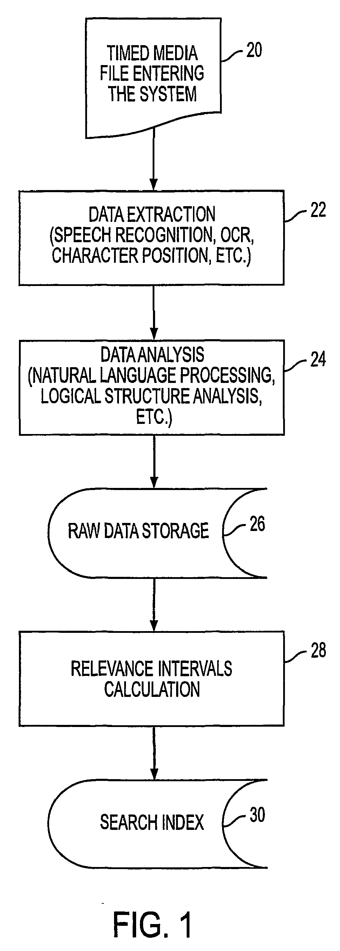

Referring to Fig. 1, the timed media indexing system and method for searching and retrieving timed media according to the present invention is illustrated. A timed media file is entered into the system in step 20. The system then extracts data from this file in step 22. The extracted data can include spoken words, on-screen text, meta-tag information, and other types of data. The extracted data is then analyzed in step 24 using natural language processing and logical structure techniques. The results of the analysis are saved in a raw data index in step 26, so that users can access the raw data for highly accurate multi-information representation queries and for the creation of customized search indices at a later date. Relevance intervals and their associated magnitudes of relevance are calculated for each information representation in step 28, and the relevance intervals and the corresponding magnitudes of relevance are stored in the search index in step 30.

The term relevance interval as used herein means a continuous section of a timed media file, e.g. video or audio, that is deemed relevant to a particular information representation. The relevance intervals are calculated using mathematical formulae that take into account the clustering of the occurrences of information representations; a set minimum length; the natural breaks in the media, such as paragraphs, changes in slides, verbal pauses, or speaker changes; natural language processing data, such as parts of speech, grammatical structure, and grammatical references; ontological information, such as synonyms, classifications, and similarities; logical structure based upon transition words, visual layout, and surrounding HTML; and other extracted data. The set minimum length is needed since a three second clip, for example, would rarely be of any use.

The term information representation as used herein is a broad concept encompassing particular definitions of single words, such as numerous parts of speech including nouns, proper names, verbs, adjectives, adverbs, as well as combinations of concepts, words, sentences, and multiple sentences. An information representation need not be a complete sentence. It is expected that an information representation would not be a single article, preposition or conjunction since such parts, absent connection to other parts of speech, do not convey meaning. Furthermore, articles, conjunctions and prepositions occur so often, that extracting relevance intervals for such words by themselves would yield meaningless results. For example, the word "the" is one of the most commonly occurring words in the English language. To search for the word "the" absent connection to another part of speech would produce a great number of relevance intervals, all of which would be too short to be useful. On the other hand, an information representation such as "the Great Depression" uses the article "the" in connection with the adjective "great" and the noun "depression." Such an information representation would be much more likely to provide useful relevance intervals.

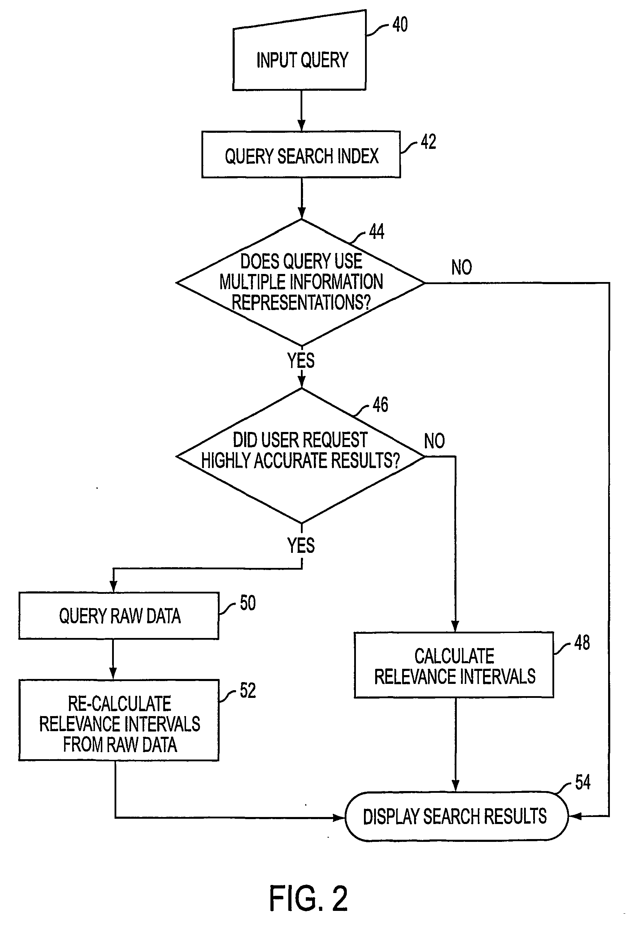

Fig. 2 is a flow chart showing an overview of the process of creating and returning search results to a user. In step 40, the user inputs a search query The search index is then queried for the relevance intervals associated with each information representation in step 42. In step 44, a determination is made as to whether the query includes more than one information representation. If the search included only one information representation, then the process proceeds to step 54 where the search results are displayed to the user. If, on the other hand, the search used multiple information representations, then the process proceeds to step 46 where a determination is made as to whether the user requested a search of sufficient accuracy to warrant calculations using the raw data. If the user did not request sufficiently accurate search results, the system then calculates intervals appropriate for the combination of information representations in step 48, and then displays the search results in step 54. The calculations of step 48 can be performed quickly using simply the relevance intervals for each individual information representation. If, however, the user requested sufficiently accurate search results, the system then performs a more time consuming process of querying the raw data in step 50, calculating more precise multi-information representation relevance intervals from the saved raw data in step 52, and then displaying the results to the user in step 54.

Step 54 of displaying the results to the user may, in some instances, be unnecessary. For instance, in a corporate training context, existing timed media files may be used to locate content that relates to a certain topic, e.g., employment discrimination. The results, namely the virtual documents that are relevant to the query and the relevance intervals they comprise, may be stored, but not displayed. These results might be used, for example, at a later date to automatically create a training program relating to employment discrimination.

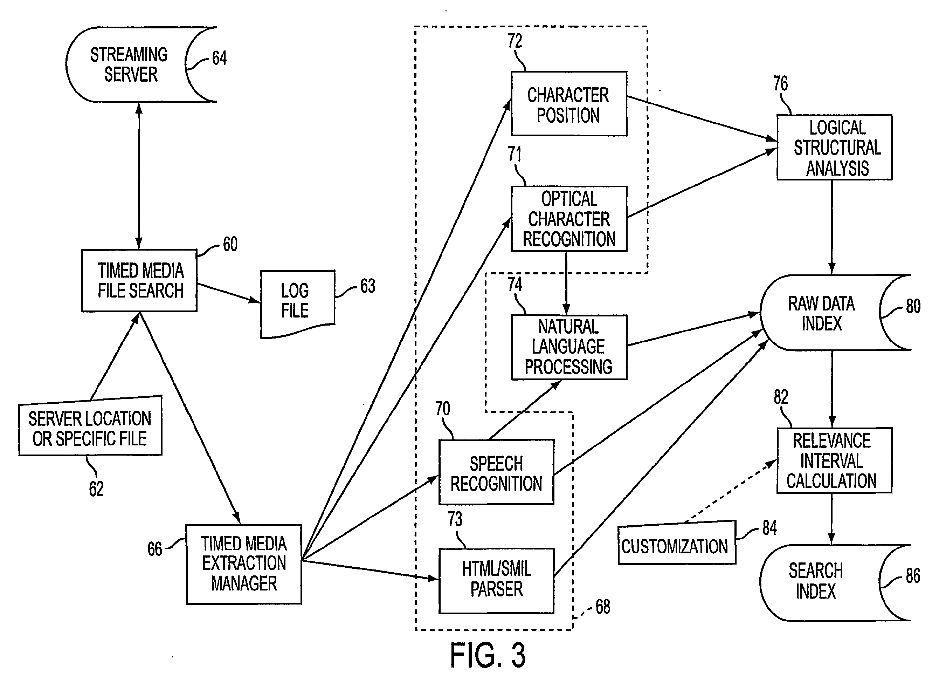

Fig. 3 is a process chart that sets forth the process of creating a search index and raw data index. The process chart illustrates the system modules, inputs, and outputs, as opposed to the flow chart steps shown in Fig. 1. An administrator can direct the system to a given timed media file or a server containing timed media files, as depicted in block 62. In the latter case, the system can detect new timed media files automatically via the timed media file search block 60. A log of this activity is kept in the log file, block 63. When the timed media file search block 60 is directed to a timed media file that is new to the system, the timed media file search block 60 informs the timed media extraction manager 66, which in turn directs information extraction modules 68 to run on the timed media file. The information extraction modules 68 include speech recognition module 70, optical character recognition module 71, HTML/SMIL parser 73, and character position module 72.

The information extraction modules 68 are integrated versions of third-party software that are customized to retain the time-code and other information, as discussed below. Extracted data from the information extraction modules 68 is passed to an analysis engine. In particular, the data extracted by the speech recognition module 70 and optical character recognition module 71 are passed to the natural language processing module 74, and the character position module 72 and optical character recognition module 71 send data to the logical structural analysis module 76.

The outputs from the logical structural analysis module 76, the natural language processing module 74, the speech recognition module 70, and the HTML/SMIL parser module 73 are all stored in the raw data index 80. The raw data stored in the database 80 is utilized to calculate relevance intervals in block 82. The relevance interval calculations in block 82 can be customized as noted by customization block 84. The resulting relevance intervals are then stored as search index 86.

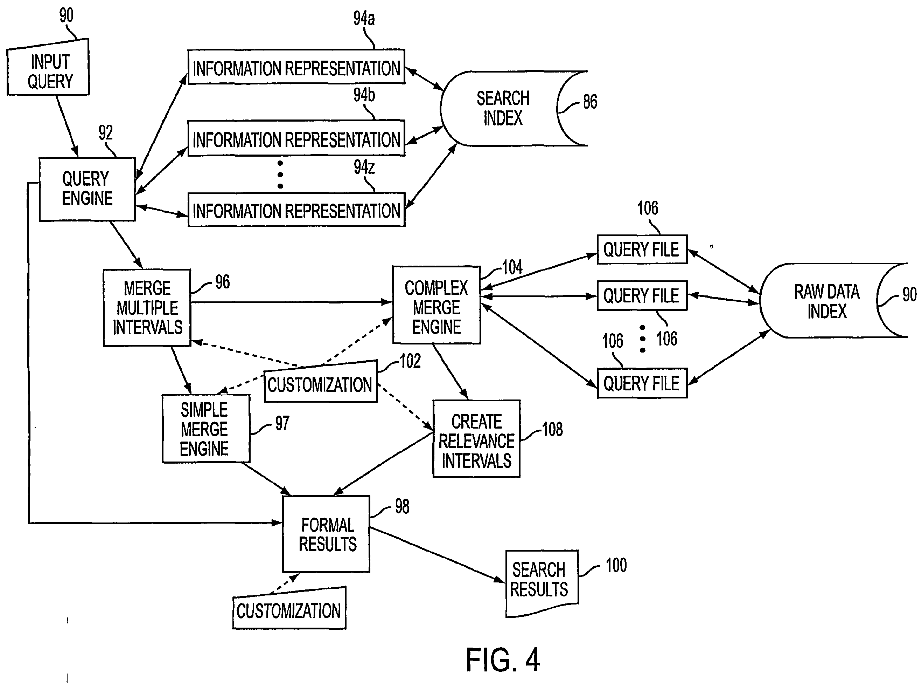

Referring to Fig. 4, a process chart showing the operation of the system in response to a user-entered query is illustrated. When an input query 90 is received by the query engine 92, the query engine 92 parses the query 90 and directs query processes for each query information representation 94a, 94b...94z. Each of the query processes reviews the search index 86 and returns the results most relevant to each information representation 94. If the input query 90 consists of only a single information representation, then the results are formatted in module 98 and displayed to the user in search results 100.

If the input query 90 consists of multiple information representations 94, the query engine 92 passes the user inputs to module 96, which determines the method by which the system will calculate relevance intervals for the multiple information representations. If the user specified a quick search, the module 96 sends the results to simple merge engine 97 that performs the calculations necessary to combine the relevance intervals from the search index 86 into formatted results that are relevant to the plurality of information representations 94. The combined results are then formatted in module 98, and displayed to the user as search results 100. The methods by which the multiple intervals are merged, as well as the individual calculation themselves, are customizable by the user, as denoted by module 102.

If the user specifies a more accurate search, the merge multiple intervals module 96 instructs the complex merge engine 104 to query the raw data 80 for the files 106 that contained relevance intervals for each of the information representations 94. Module 96 forwards the results from the query engine 92 to the complex merge engine 104. Module 108 utilizes the results from module 92, the decisions made by module 96, and the raw data collected by the complex merge engine 104 to perform the complex merge of the relevance intervals from files 106, thereby creating relevance intervals that are relevant to the plurality of information representations and the relevance magnitudes for the relevance intervals. The manner in which the complex merge engine 104 and the relevance interval creation module 108 operate is customizable through customization module 102. Once again, the results are then formatted in module 98, and displayed to the user in search results 100.

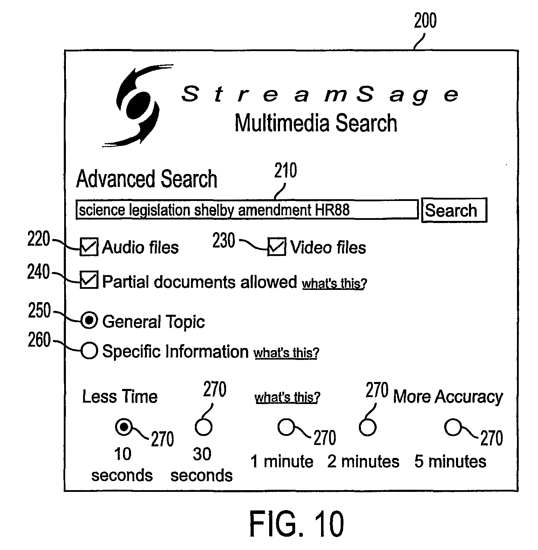

Fig. 10 shows a screen 200 that is presented to a user to perform a search using the system of the present invention. The screen 200 includes a query input space 210, which in Fig. 10 contains the input query "science legislation Shelby amendment HR88." Below the input query space 210 are boxes 220 and 230 through which the user designates the type of timed media files to be searched, i.e. audio files and/or video files, respectively. Next the user can designate how the results are returned, either including entire documents or partial documents, by marking box 240. The user can further elect a general topic search, via box 250 or a specific information search via box 260. Finally, the user selects the degree of accuracy by choosing the time for the search via boxes 270. The more time selected, the more accurate the search.

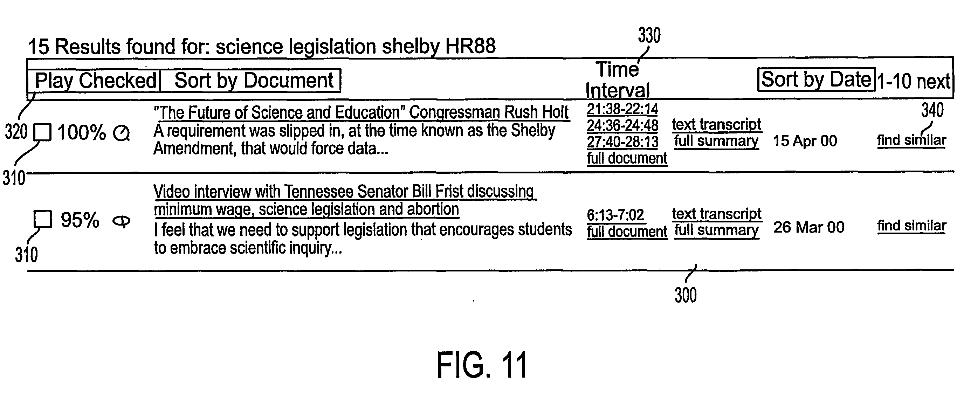

The results may be displayed in a screen 300 as shown in Fig. 11. The results can be sorted by document or by date. In the example shown in Fig. 11, the search returned 15 results, of which two are shown in the window. Each result includes a relevance magnitude, information describing the timed media file, sample text from the relevant portion of the file, the time intervals of the relevance intervals, and the date. For each result, a box 310 is provided that allows the user to combine that result with others that are checked into one large file for playback. The playback of the combined results is achieved by accessing the "play checked" box 320. Alternately, the user can select any individual interval listed in the time interval section 330 or the full document. Instead of playing the timed media file, the user can access a text transcript of the timed media file or a full summary; both of which are automatically created by the system. The results display screen 300 also allows the user to manipulate the results by clicking on the "find similar" indicator 340 to sort the results so that results similar to the selected result are displayed.

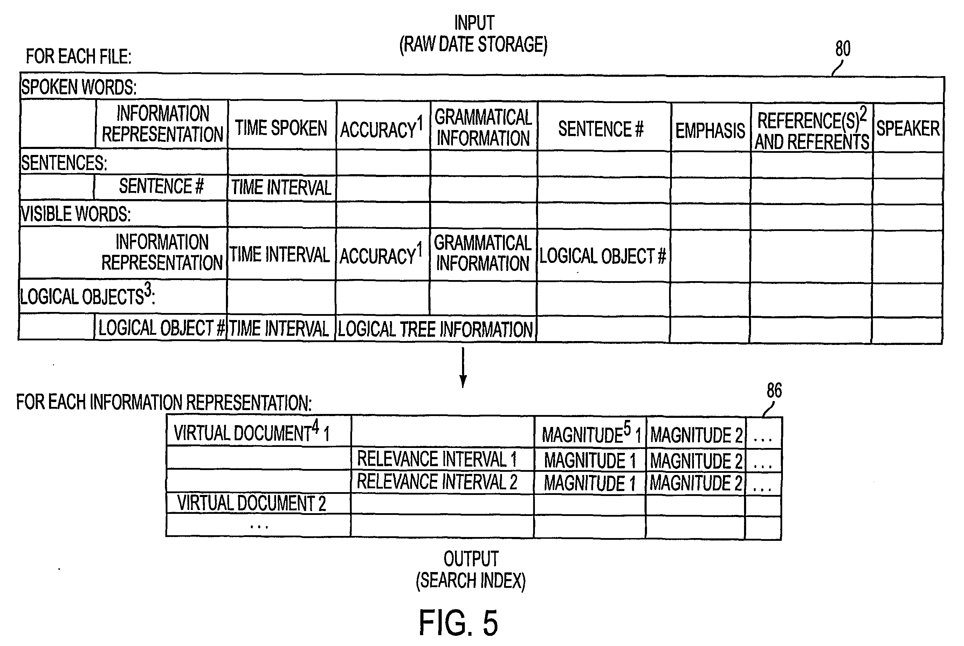

Referring to Fig. 5, sample inputs and outputs of the relevance interval calculations of the system of the present invention will be described. The upper part of Fig. 5 represents the raw data index 80 inputted to the relevance interval calculations, and the bottom of Fig. 5 represents the search index 86 produced as described previously with regard to Fig. 3. The input is the raw data index produced from the logical structural analysis module 76, the speech recognition module 70, the natural language processing module 74, and the HTML / SMIL parser module 73. The raw data includes each information representation that is located within the timed media file, the time-code location of the occurrence of each information representation, groupings of such information representations (either sentences or visual objects), and logical or grammatical relationships between information representations and information representation groupings

For spoken information representations, the raw data index 80 includes data such as the time-code at which the information representation occurs in the file, the accuracy representing the certainty by the speech recognition system of its correct identification of the information representation(s), grammatical information such as the part of speech of the information representation or types of clauses of which the information representation is a part, the sentence number, the emphasis, references and referents such as the information representation to which a pronoun refers, synonyms, adjectives and other modifiers, etc., or the person who spoke the information representation.

For sentences, the raw data index 80 includes data such as the sentence number and the time-code at which the sentence occurs in the file.

For visible information representations, the raw data index 80 includes data such as the information representation, the time-code at which the information representation is visible, the accuracy representing the certainty by the optical character recognition system of its correct identification of the information representation(s), grammatical data such as the part of speech of the information representation or types of clauses of which the information representation is a part, and the logical object number.

For logical object information representations, which are the output of logical structure analysis module 76 that parses outlines, headlines, etc. from PowerPoint® slides or typed overhead projections, the raw data index 80 includes data such as the logical object number, the time-code at which the information representation occurs in the file, and the logical tree information.

The output of the relevance interval calculations, contained in the search index 86, includes a list of potential search results which are a collection of relevance intervals that are streamed back-to-back and indexed as a single virtual document. The entry for each information representation contains a list of the relevance intervals that make up the virtual document. For each relevance interval there is one or more relevance magnitudes listed that provide a measured weight to the relevance of the virtual document or relevance interval. A relevance magnitude is a measure of the degree to which the relevance interval is relevant to the information representation. Multiple magnitudes correspond to different search contexts or user situations. The term virtual document, as it is used herein, means a group of one or more relevance intervals that are indexed, searched for, and played back as if they were a whole timed media file. In reality, virtual documents exist only as pointers to the time-code of a timed media file. In the preferred embodiment of the present invention, the relevance intervals that make up a virtual document are almost always from same timed media file.

The system of the present invention consists of three basic components, an indexing component, a searching component, and a playback component.

### Indexing

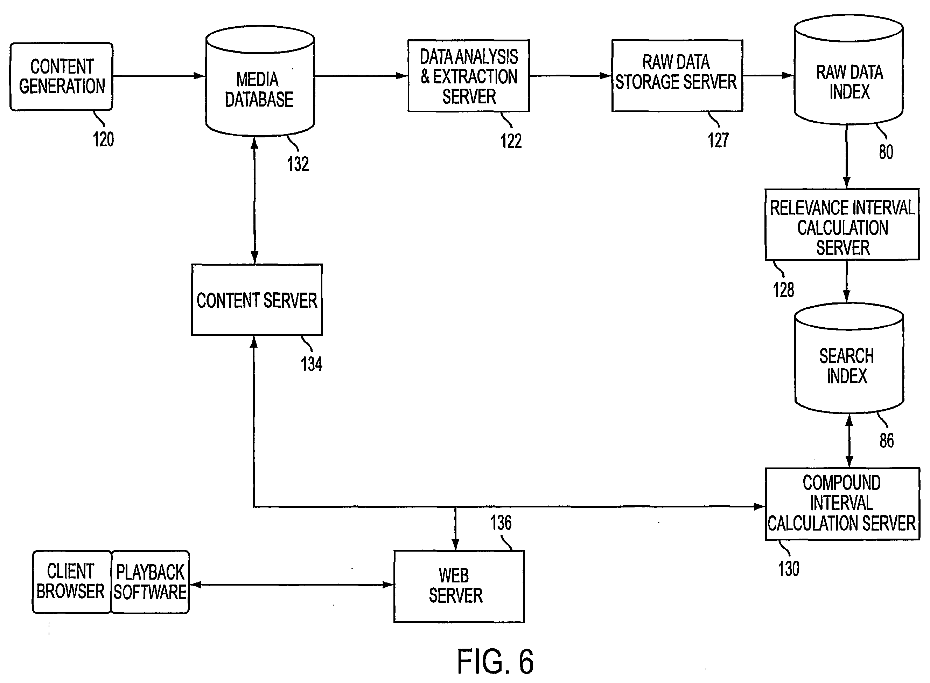

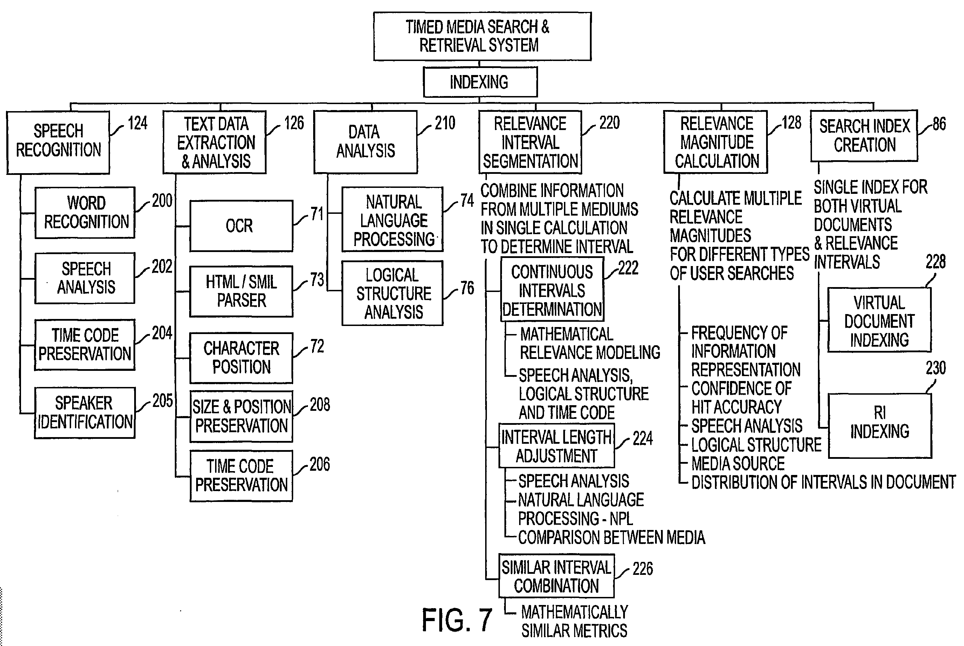

Referring to Figs. 6 and 7, the indexing component is illustrated. As discussed in brief previously, the present invention creates two databases of information derived from the timed media files; a raw data index 80, and a search index 86. The first major step in the indexing process is the generation of the raw data index 80. The generation of the raw data index 80 is accomplished through the integration of third party data extraction and processing tools, such as speech recognition software, natural language processing software, and optical character recognition software.

The content of the timed media files is generated during recording of the file itself, as represented by content generation block 120. The timed media file is then saved in Media Database in block 132. These saved timed media files are then entered into the data analysis and extraction server 122. In factual information-based timed media files, most of the information is contained in the spoken information representations of the presenters or discussion participants. A speech recognition and analysis system 124 captures such information representations, in block 200 of Fig. 7, and records the time at which each information representation is spoken in block 204. The system then performs the basic speech analysis represented by block 202, such as the identification of sentences and paragraphs. The system also performs speaker identification analysis, represented in block 205. Unlike speech recognition for real-time transcription or dictation, speech recognition in this system can have a much higher degree of accuracy due to the fact that the speech recognition function does not have to be performed in real-time.

Information representations are also extracted from the visual information via optical character recognition (OCR) in block 71, HTML / SMIL parsing in block 73, character position recognition in block 72, and other data extraction by the text data extraction and analysis system 126. The data extraction and analysis system 126 records both the time interval over which the information representations are visible on the screen, in block 206, and the position and size information for the information representations in block 208.

After capture, the information is analyzed to detect additional parameters and relationships between the information representations and sentences, as represented by block 210. The visually conveyed information representations are analyzed by logical structure analysis techniques in module 76. Such analysis recognizes the logical structure of on-screen lists, outlines, topics, etc. All information representations, both visual and spoken, are analyzed with natural language processing techniques in module 74. The natural language processing system includes such analysis as syntactic parsing and semantic interpretation to determine the part of speech of each information representation; the disambiguation of grammatical references, such as pronouns, modifiers, and other referents; the recognition of logical structures such as lists; and a mapping between words and information representations that are to be indexed. All of the data generated by the analyses are saved by the raw data storage server 127 into the raw data index 80.

Once all of the raw data has been captured from a timed media file, the present system calculates the intervals of the timed media file that are relevant to each information representation that is contained within the file in block 220. These relevance intervals, along with the virtual documents they compose, are fundamentally important parts of the present invention, and are stored as the search index database 86.

The content of the search index 86 is used to calculate compound intervals in block 130. A user interfaces with the system using a Web server 136. Through this Web server, the user can input commands to the content server 134 which retrieves timed media content stored in the media database 132. The user can access the calculated compound intervals and/or broaden the playback to include sections of the entire timed media file beyond the relevance intervals, up to and including the entire timed media file if desired.

There are three high-level steps in the creation of the virtual documents, as set forth in block 220 of Fig. 7. First, in block 222, a set of intervals is defined that collectively encompass each occurrence of the information representation within the timed media file. Each interval may contain a single occurrence or a cluster of occurrences depending upon the distribution of occurrences and the document structure that can be inferred from the raw data. For example, a timed media file may contain a particular information representation at the following locations:
(03:16)(12:20)(12:43)[27:09-28:11](27:18)(27:22)(27:57),
where the times in parentheses correspond to spoken words and the interval in the brackets indicates an interval of on-screen visibility of the information representation. These occurrences might be grouped into three intervals in this first step: one interval including the first occurrence, one including the second and third occurrences, and a third interval that spans the on-screen appearance of the information representation (and thus the final three occurrences).

The decisions of how to cluster occurrences into intervals is made based upon a number of factors including the following:
1) The temporal distribution of the occurrences. As in the above example, some sparse information representations may be grouped based on long time separations between clusters of occurrences.
2) Grammatical reference data. Depending upon the information representation and the search parameters, the intervals may be defined to include pronouns, synonyms, and other terms that make reference to the information representation.
3) References between sentences and temporal logical structure. For example, pronouns and other references, lists, temporal relationships, or other clauses may indicate that a number of sentences are of a single logical unit of paragraph size.

Once intervals have been defined that include all of the information representations, the second step in the process is to adjust the beginning and end-points of these intervals to include the appropriate amount of content that does not include the information representation, as set forth in block 224 in Fig. 7. In actuality, the first two steps will be done concurrently, with important feedback being passed between the two processes. They are listed separately to provide better conceptual understanding.

The purpose of the second step, 224, is to make each interval a minimal self-contained contextual unit with respect to the information representation. In other words, enough content must be included to make the context of the information representation clear and to convey the most important information concerning the information representation. At the same time, extraneous content that, while possibly relevant to information contained within the interval, does not pertain to the information representation, must be excluded.

The adjustments to the relevance intervals are based on some of the same factors as the original definition of the relevance intervals, including sentence information, references between sentences, and other grammatical information. Information may be combined from multiple media, e.g. audio and video, in a single calculation to determine the interval length. In addition, the factors listed below are taken into account.
1) The part of speech of the information representation. For example, the following passage is from a speech by presidential candidate Al Gore. The fact that the proper noun "Cold War" is used as an adjective indicates that the Cold War is probably not the central topic of this portion of the speech, and that therefore the relevance of this occurrence probably does not, in the absence of other occurrences, span beyond the passage.
   "We are now in a new era. To label this time 'the post-Cold War era' belies its uniqueness and its significance. We are now in a Global Age. Like it or not, we live in an age when our destinies and the destinies of billions of people around the globe are increasingly intertwined."
2) Comparison between spoken and visual data. To illustrate, consider an information representation that is located in a certain logical object on a PowerPoint® slide that is visible during a particular portion of a timed media file. Often a speaker will address that logical object while the slide is visible. By comparing the words in the logical object with spoken words, the system can identify the time interval of the timed media that is most relevant to the logical object, which can then be used to adjust the length of the relevance interval. For example, if the visible logical object is a minor detail in a list, then it may be sufficient for the relevance interval to include a small portion of timed media, including the time when the speaker mentions the detail, rather than the entire time the information representation is visible on the screen.
3) Rules involving natural language processing intervals for different information representations. The rules combine the relevance interval model with natural language processing output to increase the accuracy of the relevance intervals. For example, given information representations A and B and relevance intervals <A1> and <B1> for each information representation, if
   1. B is an example of A, given their grammatical and lexicographic context within the file (such as B = "natural gas" and A = "petroleum"),
   2. <A1> ⊃ <B1>, and
   3. <B1> is "almost all" of <A1>,
then it is generally appropriate for <A1> to equal <B1>.

Lastly, once the relevance intervals have been defined and adjusted, virtual documents are created by combining similar relevance intervals in block 226. The distinction between this combination and what happens in the earlier definition of intervals is that here the intervals being combined are not contiguous. Because virtual documents, not relevance intervals, are the default result returned in response to a search, it is important to consider which relevance intervals should be combined and which should not. In some instances, it is appropriate to index a combination of the relevance intervals in a timed media file into a single virtual document because.they all contain similar information, as shown in block 228 of Fig. 7. In other cases, it may be that the contexts of the relevance intervals are sufficiently different that they should be indexed separately, shown in block 230 of Fig. 7. Basically, the decision comes down to a question of: given a user that is interested in one particular relevance interval, how likely is it that they will be equally interested in a second relevance interval.

The decision is made based upon factors such as the following:
1) The statistical similarity of information representations in the intervals as in block 226 of Fig. 7. In particular, if information representations that are not very common and are not relevant to the entire file are located in both relevance intervals, then there is a higher likelihood of a contextual similarity between the relevance intervals. Another way of making the same comparison is to examine the number of other information representations that have relevance intervals that are closely synchronized to both of the intervals in question. If a number of information representations have similar sets of relevance intervals, it is very likely that the content between their relevance intervals is related.
2) Rules involving relevance intervals and the output of the natural language processing system and other analysis systems. As in the previous step, there are specialized language rules involving relevance intervals that can be invoked. For example:
   Let <B1> and <B2> be relevance intervals for the information representation B.
   Let F<Bi> ≡ {information representations W|∃<Wj>⊃<Bi> and B is an example of W (as in the rule above)}
   Then, if F<B1> is sufficiently similar to F<B2>, <B1> and <B2> should be a part of the same virtual document.

In unusual cases, virtual documents may also combine relevance intervals from multiple timed media files. This is most likely to occur when it is known that the multiple files are related in some way, such as a series of lectures on a single subject by the same lecturer or a series of updates on the same news story.

Once the virtual documents are calculated, the final step in creating the data for the search index 86 is the calculation of the relevance magnitudes for each relevance interval and each virtual document, shown in block 128. These magnitudes, like the relevance numbers associated with indexed static text documents, are used to rank the search results in an approximate order of usefulness. The basis of the magnitude calculations will include considerations similar to those used in standard static text document indexing, such as frequency of occurrence (relative to frequency over a large sample of documents). These calculations will also take into account other information in the raw data index 80, such as the parts of speech of the occurrences, the importance of the logical objects that include the information representation, spoken or visual emphasis, frequency of highly related information representations, etc.

In addition, the magnitude calculations take into account other information that is specific to the context of the user or the user's search. In fact, multiple magnitudes are sometimes calculated for a single relevance interval or virtual document, with the particular magnitude used in a given search determined by user input or the known context of the user. For example, the library of timed media files held by a corporation may be used for a wide variety of purposes. A customer sales representative may have very different viewing patterns than an employee in the legal department or an unknown person on the Internet who views the publicly available portion of the library. Some of these differences may translate into quantifiable preferences for certain types of content over other types (e.g. segments of different length or the importance of one meaning of a word over another). Weighing the magnitudes assigned to the relevance intervals and the virtual documents differently for different users can cater to such preferences.

Lastly, it is important to note that the timed media indexing system of the present system differs from other systems in its ability to be customized. As the previous example concerning multiple relevance magnitudes suggests, value can be added to this system by customizing it to the context of a particular implementation. Such value stems from the fact that it is simply much more difficult to usefully index timed media files than static text documents (for which the search engines do not include customization).

### Searching

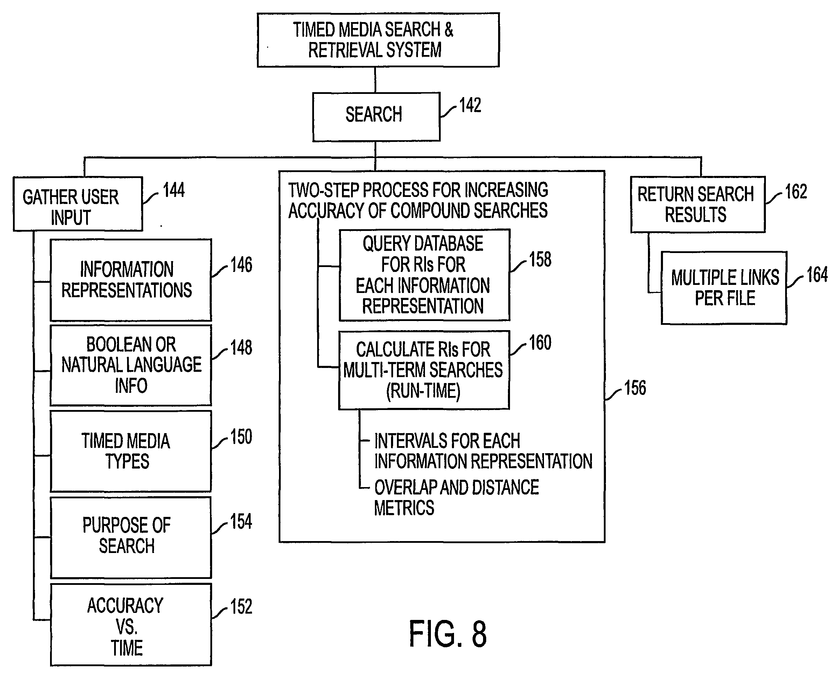

Referring to Fig. 8, the search aspect 142 of the present invention is illustrated. The search aspect 142 encompasses the step of gathering the input query from the user in step 144, determining the information representations in step 146, applying Boolean or natural language information in step 148, determining the types of timed media documents in step 150, evaluating the accuracy of the recognition of the occurrences of the information representation(s) versus time in step 152, and evaluating the purpose of the search in step 154.

The system then performs the previously discussed two-step process for increasing the accuracy for compound searches in step 156. This includes querying the search index 86 for relevance intervals for each query information representation in step 158, and calculating relevance intervals for the multi-information representation search in step 160. Finally, the system returns the results to the user in step 162, which may include providing multiple links per timed media file, in step 164.

Another aspect of the present invention is the advantage that an administrator does not need to be familiar with the actual calculations going on within the system to customize the system. The administrators can simply select parameters and preferences based upon the situation of the users, which the system will then translate into precise adjustments in the calculations. For example, during implementation of the system, an indication may be made that clients will primarily use the system for employee training as opposed to research. The administrator can then use this information to create multiple search indices or relevance magnitudes from the same raw data index 80 and have the system selectively use each search index 86 in particular situations.

In addition to information representations (referenced in block 146), a user can enter a number of optional parameters that will affect the search results. The system and method of the present invention will search by performing actions based upon the query information representations and any such additional inputs. The optional parameters include, but are not limited to, an instruction to only return whole documents (as opposed to virtual documents), a measure of the time the user is willing to wait in order to return more accurate results (block 152), an indication of whether to restrict the search to certain types of media (block 150), and information concerning the purpose of the search (block 154).

If the search consists of only a single query information representation, the system will retrieve the virtual documents that are listed as relevant to the query information representation in the search index 86. If more than one magnitude is listed in the search index 86, then the system will make a decision as to which to use based on any of the additional parameters entered by the user or any other knowledge about the user. The results will be displayed for the user in block 162 of Fig. 8 and step 100 of Fig. 4.

The process is considerably more complicated when the user enters multiple query information representations. Since a primary goal of the relevance interval approach is to return content that is precisely relevant to the search, one would ideally like to achieve a custom relevance interval for the specific combination of information representations entered by the user. However, the computational work required to calculate such relevance intervals for all combinations of potential query information representations for a given file is unobtainable.

The system and method of the present invention implements an approach that achieves the foregoing goal fairly well, but does not necessitate the same degree of computational work. The system queries the search index 86 for the virtual documents that are relevant to each query information representation (block 158). If the user requires immediate results (the preset as a default setting), then the system creates new virtual documents by adjusting the relevance intervals to take into account the multiple information representations. For example, given a timed media file that has sections relevant to both information representations in a two-information representation query, the system examines the relationship between the relevance intervals for each information representation. If the relevance intervals are relatively short and far apart from each other, the system may decide that no portion of the timed media file is likely to be relevant to both query information representations. If, however, there is significant overlap in the relevance intervals, it is most appropriate to return to the user a virtual document including the union of both relevance intervals. The degree of overlap, magnitude of relevance of each relevance interval, natural language processing information concerning the relationship between the query information representations, and the user-provided search parameters are used to decide what portions of the relevance intervals should be included, and what magnitude should be assigned to the newly created virtual document.

The new virtual documents are then ordered according to relevance magnitude and returned to the user as search results 162.

The new virtual documents are more precise than simply returning the union of virtual documents for the query information representations, but the new virtual documents are not nearly as precise as the individual information representation relevance interval calculations. As a result, the system gives the user the option of returning to the raw data index 80 to precisely calculate virtual documents for multi-information representation queries. Here the system uses the results from the search index 86 query to estimate which timed media files are most likely to be relevant. The system calculates new virtual documents for the multiple query information representations for only those timed media files that have been shown via the search index 86 to be sufficiently relevant to each individual query information representation.

The calculation from the raw data index 80 of new virtual documents is very similar to the original single-information representation calculations. The same parameters are considered in the calculations with the added constraint that all query information representations be taken into account. For example, the more closely correlated the appearance of two information representations, both semantically and temporally, the more highly relevant the given portion of the timed media file is considered. Such multi-information representation consideration also affects the use of natural language processing data. If one query information representation is a noun and another is an adjective, the presence of the given adjective modifying the given noun is perceived as significantly more relevant than the same adjective modifying a noun nearby an independent occurrence of the given noun.

Similar to the creation of the search index 86, the calculations involved in multi-information representation searches are highly customizable (blocks 102, 109, and 110 in Fig. 4). The selectivity of picking single-information representation relevance intervals as relevant to the multi-information representations, the amount of calculation performed on raw data, and numerous other parameters can be set by implementers and system administrators. In an e-learning system, a return of more inclusive multi-information representation virtual documents is desirable than in an implementation used for finding specific medical information. For each such implementation, the setting of the customizable parameters is crucial in fine-tuning the effectiveness of the system.

An additional feature of the system is the ability to save or pass along to other users a single virtual document or set of search results. Such a capability is especially useful where the multi-information representation search takes awhile to compile. The system may automatically store precisely calculated multi-information representation searches that are likely to recur for quick access by subsequent users. In addition, the user can save the results at their own station for subsequent manipulation and review.

The user can further instruct the system to create actual media files from particularly useful virtual documents for use by other users or on other computer systems. This eliminates the need for continually utilizing the searching components of the present system to produce the virtual document multiple times for different users or for multiple accesses by the same user and allows the virtual document to be transferred, used elsewhere, and edited as a normal timed media file.

### Playback

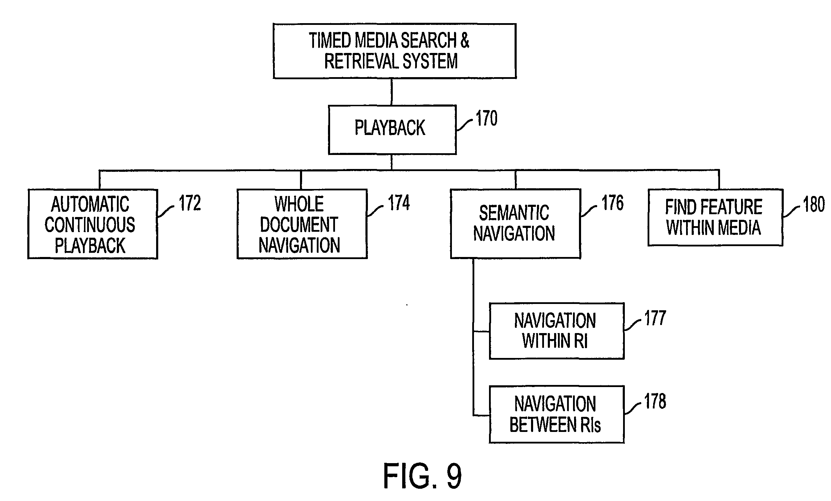

The displayed results of a search include links to each virtual document. Because these virtual documents are not timed media files, but simply pointers to the time-code of actual timed media files, additional features must be included in the system in order to utilize the advantages of the system. Referring to Fig. 9, when a user follows a link to a virtual document, the appropriate media player, i.e. QuickTime®, NetMeeting®, RealPlayer®, etc., begins playing the streamed media in block 170. The virtual document will be automatically played continuously, in block 172, despite the fact that it may comprise several discontinuous sections of the timed media file. Furthermore, an additional navigation bar can appear below the media player indicating the portion of the document that is currently being played. In step 174 of Fig. 9, the player's standard navigation bar allows the user to navigate within the whole document from which the virtual document being played was created. Additional buttons can be provided to allow semantic navigation in step 176. The semantic navigation 176 includes navigating within relevance intervals, step 177, and between relevance intervals, step 178. The user can thus easily find the desired feature within the timed media file in step 180. The user can therefore easily navigate the portions of the timed media files that have been deemed relevant to the query information representation(s), while also easily being able to view the rest of the original timed media file at the touch of a button.

Having described several embodiments of the method and system for searching and retrieving timed media based upon relevance intervals in accordance with the present invention, it is believed that other modifications, variations and changes will be suggested to those skilled in the art in view of the description set forth above. For example, as speech recognition software improves by including additional capabilities such as the ability to recognize added emphasis on words, the present invention can utilize these new capabilities to determine relevance intervals. It is therefor to be understood that all such variations, modifications and changes are believed to fall within the scope of the invention as defined in the appended claims.

## Claims

1. A method of indexing and searching timed media files comprising the steps of:
extracting data (22) from a timed media file, said extracted data comprising at least one information representation of a word or phrase; and
calculating (28) a relevance interval for each of said at least one information representation from said extracted data, **characterised in that** beginning and end points of the relevance interval are adjusted in dependence on the at least one information representation.

2. A method of indexing and searching timed media files, as recited in claim 1, further comprising determining a plurality of occurrences of the information representation in the timed media file, wherein calculating comprises calculating the relevance interval such that the plurality of occurrences are within the beginning and end points of the relevance interval.

3. A method of indexing and searching timed media files, as recited in claim 1, further comprising:
determining from the extracted data a plurality of occurrences of the information representation in the timed media file; and
determining a first subset and a different second subset of the plurality of occurrences,
wherein calculating comprises calculating the relevance interval such that the first subset of the plurality of occurrences, and not the second subset of the plurality of occurrences, are within the beginning and end points of the relevance interval.

4. A method of indexing and searching timed media files, as recited in claim 3, further comprising calculating another relevance interval having a beginning point and an end point such that the second subset of the plurality of occurrences, and not the first subset of the plurality of occurrences, are within the beginning and end points of the another relevant interval.

5. A method of indexing and searching timed media files, as recited in claim 3, wherein determining the first and second subsets comprises determining the first and second subsets based on a temporal distribution of the occurrences.

6. A method of indexing and searching timed media files, as recited in claim 1, wherein calculating comprises calculating the relevance interval to have at least a minimum length.

7. A method of indexing and searching timed media files, as recited in claim 1, wherein said calculation of a relevance interval for each of said at least one information representation results in relevance intervals for different information representations that overlap.

8. A method of indexing and searching timed media files, as recited in claim 1, wherein said data extracting step comprises the step of performing optical character recognition (71) of said data in said timed media file.

9. A method of indexing and searching timed media files, as recited in claim 1, wherein said step of data extraction includes extracting time-code data (80) indicating a time for each occurrence of said at least one information representation.

10. A method of indexing and searching timed media files, as recited in claim 7, wherein said step of data extraction includes extracting an indication of the certainty of a correct word by said speech recognition (70).

11. A method of indexing and searching timed media files, as recited in claim 8, wherein said step of data extraction includes extracting an indication of the certainty of a correct word by said optical character recognition (71).

12. A method of indexing and searching timed media files, as recited in claim 1, wherein said step of data extraction includes extracting a sentence number (80) for each sentence containing said at least one information representation.

13. A method of indexing and searching timed media files, as recited in claim 7, wherein said step of data extraction includes extracting an identification of a speaker (205) of said at least one information representation.

14. A method of indexing and searching timed media files, as recited in claim 1, wherein said data extracting step comprises the step of performing logical structural analysis (76) of said data and includes extracting a time interval that a logical object containing said at least one information representation is visible.

15. A method of indexing and searching timed media files, as recited in claim 1, further comprising the steps of:
creating a raw data index (80) containing said extracted data;
performing natural language processing (74) of said extracted data; and,
storing results of said natural language processing in said raw data index.

16. A method of indexing and searching timed media files, as recited in claim 1, wherein each said relevance interval is a continuous section of said timed media file.

17. A method of indexing and searching timed media files, as recited in claim 1, further comprising the step of calculating a magnitude of relevance for each said relevance interval.

18. A method of indexing and searching timed media files, as recited in claim 1, further comprising the steps of
calculating (28) a magnitude of relevance for each said relevance interval; and
storing (30) said magnitude of relevance for each said relevance interval in the said search index.

19. A method of indexing and searching timed media files, as recited in claim 17, wherein said magnitudes of relevance are measures of a degree to which said relevance interval is relevant to said at least one information representation.

20. A method of indexing and searching timed media files, as recited in claim 1, further comprising the step of creating at least one virtual document comprising at least one relevance interval streamed back-to-back.

21. A method of indexing and searching timed media files, as recited in claim 20, further comprising the step of creating a search index (86) containing said at least one virtual document.

22. A method of indexing and searching timed media files, as recited in claim 20, further comprising the step of calculating a magnitude of relevance for each said at least one virtual document.

23. A method of indexing and searching timed media files, as recited in claim 21, further comprising the steps of
calculating (128) a magnitude of relevance for each said virtual document; and
storing said magnitude of relevance for each said virtual document in said search index.

24. A method of indexing and searching timed media files, as recited in claim 22, wherein said magnitudes of relevance are measures of a degree to which said relevance interval is relevant to said at least one information representation.

25. A method of indexing and searching timed media files, as recited in claim 1, further comprising the step of receiving at least one query information representation (94a to 94z).

26. A method of indexing and searching timed media files, as recited in claim 25, further comprising the steps of determining if at least two query information representations have been input.

27. A method of indexing and searching timed media files, as recited in claim 26, further comprising the step of determining a degree of accuracy of a search by receiving a user selection (270) of a time for the search.

28. A method of indexing and searching timed media files, as recited in claim 27, further comprising the step ofcomparing said at least two query information representations to said search index to perform said step of creating at least one virtual document.

29. A method of indexing and searching timed media files, as recited in claim 27, further comprising the step of comparing said at least two query information representations to said raw data index to perform said step of creating at least one virtual document.

30. A method of indexing and searching timed media files, as recited in claim 29, wherein relevance intervals are determined based upon occurrences of said at least two query information representations, and overlap of said occurrences of said at least two query information representations.

31. A method of indexing and searching timed media files, as recited in claim 20, wherein said virtual documents are displayed, and can be expanded to include an entire timed media file from which said virtual document originates.

32. A method of indexing and searching timed media files, as recited in claim 22, wherein a ranking of said virtual documents according to said magnitudes of relevance is displayed.

33. A method of indexing and searching timed media files, as recited in claim 1, further comprising the step of displaying at least one relevance interval to the user.

## Patentansprüche

1. Ein Verfahren zum Indizieren und Durchsuchen zeitlich gesteuerter Mediendateien, aufweisend die Schritte von:
Entnahme von Daten (22) aus einer zeitlich gesteuerten Mediendatei, wobei die entnommenen Daten wenigstens eine Informationsdarstellung eines Wortes oder eines Satzes aufweisen; und
Berechnen (28) eines Relevanzintervalls für jede der wenigstens einen Informationsdarstellungen aus den entnommenen Daten, **dadurch gekennzeichnet, dass** Anfangs- und Endpunkte des Relevanzintervalls abhängig von der wenigstens einen Informationsdarstellung eingestellt werden.

2. Ein Verfahren zum Indizieren und Durchsuchen zeitlich gesteuerter Mediendateien nach Anspruch 1, weiterhin aufweisend das Bestimmen einer Mehrzahl von Auftritten der Informationsdarstellung in der zeitlich gesteuerten Mediendatei, wobei das Berechnen das Berechnen des Relevanzintervalls derart aufweist, dass die Mehrzahl von Auftritten innerhalb der Anfangs- und Endpunkte des Relevanzintervalls sind.

3. Ein Verfahren zum Indizieren und Durchsuchen zeitlich gesteuerter Mediendateien nach Anspruch 1, weiterhin aufweisend:
Bestimmen einer Mehrzahl von Auftritten der Informationsdarstellungen in der zeitlich gesteuerten Mediendatei aus den entnommenen Daten; und
Bestimmen eines ersten Untersatzes und eines unterschiedlichen zweiten Untersatzes der Mehrzahl von Auftritten,
wobei das Berechnen das Berechnen des Relevanzintervalls derart aufweist, dass der erste Untersatz der Mehrzahl von Auftritten und nicht der zweite Untersatz der Mehrzahl von Auftritten innerhalb der Anfangs- und Endpunkte des Relevanzintervalls liegt.

4. Ein Verfahren zum Indizieren und Durchsuchen zeitlich gesteuerter Mediendateien nach Anspruch 3, weiterhin aufweisend das Berechnen eines anderen Relevanzintervalls mit einem Anfangspunkt und einem Endpunkt derart, dass der zweite Untersatz der Mehrzahl von Auftritten und nicht der erste Untersatz der Mehrzahl von Auftritten innerhalb der Anfangs- und Endpunkte des anderen Relevanzintervalls liegt.

5. Ein Verfahren zum Indizieren und Durchsuchen zeitlich gesteuerter Mediendateien nach Anspruch 3, wobei das Bestimmen der ersten und zweiten Untersätze das Bestimmen der ersten und zweiten Untersätze auf der Grundlage einer zeitlichen Verteilung der Auftritte aufweist.

6. Ein Verfahren zum Indizieren und Durchsuchen zeitlich gesteuerter Mediendateien nach Anspruch 1, wobei das Berechnen das Berechnen des Relevanzintervalls so aufweist, dass dieses wenigstens eine minimale Länge hat.

7. Ein Verfahren zum Indizieren und Durchsuchen zeitlich gesteuerter Mediendateien nach Anspruch 1, wobei das Berechnen eines Relevanzintervalls für jede der wenigstens einen Informationsdarstellungen zu Relevanzintervallen für unterschiedliche Informationsdarstellungen führt, die sich überlappen.

8. Ein Verfahren zum Indizieren und Durchsuchen zeitlich gesteuerter Mediendateien nach Anspruch 1, wobei der Datenentnahmeschritt den Schritt der Durchführung einer optischen Zeichenerkennung (71) der Daten in der zeitlich gesteuerten Mediendatei aufweist.

9. Ein Verfahren zum Indizieren und Durchsuchen zeitlich gesteuerter Mediendateien nach Anspruch 1, wobei der Schritt der Datenentnahme die Entnahme zeitkodierter Daten (80) aufweist, welche eine Zeit für jeden Auftritt der wenigstens einen Informationsdarstellung anzeigen.

10. Ein Verfahren zum Indizieren und Durchsuchen zeitlich gesteuerter Mediendateien nach Anspruch 7, wobei der Schritt der Datenentnahme die Entnahme einer Anzeige der Gewissheit eines korrekten Wortes durch die Spracherkennung (70) enthält.

11. Ein Verfahren zum Indizieren und Durchsuchen zeitlich gesteuerter Mediendateien nach Anspruch 8, wobei der Schritt der Datenentnahme die Entnahme einer Anzeige der Gewissheit eines korrekten Wortes durch die optische Zeichenerkennung (71) enthält.

12. Ein Verfahren zum Indizieren und Durchsuchen zeitlich gesteuerter Mediendateien nach Anspruch 1, wobei der Schritt der Datenentnahme die Entnahme einer Satzzahl (80) für jeden Satz enthält, der die wenigstens eine Informationsdarstellung enthält.

13. Ein Verfahren zum Indizieren und Durchsuchen zeitlich gesteuerter Mediendateien nach Anspruch 7, wobei der Schritt der Datenentnahme die Entnahme einer Identifikation eines Sprechers (205) der wenigstens einen Informationsdarstellung enthält.

14. Ein Verfahren zum Indizieren und Durchsuchen zeitlich gesteuerter Mediendateien nach Anspruch 1, wobei der Datenentnahmeschritt den Schritt der Durchführung einer logischen Strukturanalyse (76) der Daten aufweist und die Entnahme eines Zeitintervalls enthält, in dem ein logisches Objekt, welches die wenigstens eine Informationsdarstellung enthält, sichtbar ist.

15. Ein Verfahren zum Indizieren und Durchsuchen zeitlich gesteuerter Mediendateien nach Anspruch 1, weiterhin aufweisend die Schritte von:
Erzeugen eines Rohdatenindex (80), der die entnommenen Daten enthält;
Durchführen einer natürlichen Sprachverarbeitung (74) an den entnommenen Daten; und
Speichern der Ergebnisse der natürlichen Sprachverarbeitung in dem Rohdatenindex.

16. Ein Verfahren zum Indizieren und Durchsuchen zeitlich gesteuerter Mediendateien nach Anspruch 1, wobei jedes Relevanzintervall ein durchgängiger Abschnitt der zeitlich gesteuerten Mediendatei ist.

17. Ein Verfahren zum Indizieren und Durchsuchen zeitlich gesteuerter Mediendateien nach Anspruch 1, weiterhin aufweisend den Schritt des Berechnens einer Größe der Relevanz für jedes Relevanzintervall.

18. Ein Verfahren zum Indizieren und Durchsuchen zeitlich gesteuerter Mediendateien nach Anspruch 1, weiterhin aufweisend die Schritte von:
Berechnen (28) einer Größe der Relevanz für jedes Relevanzintervall; und
Speichern (30) der Größe der Relevanz für jedes Relevanzintervall in dem Suchindex.

19. Ein Verfahren zum Indizieren und Durchsuchen zeitlich gesteuerter Mediendateien nach Anspruch 17, wobei die Größen der Relevanz Messgrößen eines Grades sind, bis zu dem das Relevanzintervall relevant für die wenigstens eine Informationsdarstellung ist.

20. Ein Verfahren zum Indizieren und Durchsuchen zeitlich gesteuerter Mediendateien nach Anspruch 1, weiterhin aufweisend den Schritt des Erzeugens wenigstens eines virtuellen Dokuments, welches wenigstens ein Relevanzintervall aufweist, das fortlaufend abläuft.

21. Ein Verfahren zum Indizieren und Durchsuchen zeitlich gesteuerter Mediendateien nach Anspruch 20, weiterhin aufweisend den Schritt des Erzeugens eines Suchindex (86) der das wenigstens eine virtuelle Dokument enthält.

22. Ein Verfahren zum Indizieren und Durchsuchen zeitlich gesteuerter Mediendateien nach Anspruch 20, weiterhin aufweisend den Schritt des Berechnens einer Größe der Relevanz für jedes der wenigstens einen virtuellen Dokumente.

23. Ein Verfahren zum Indizieren und Durchsuchen zeitlich gesteuerter Mediendateien nach Anspruch 21, weiterhin aufweisend die Schritte von:
Berechnen (128) einer Größe der Relevanz für jedes der virtuellen Dokumente; und
Speichern der Größe der Relevanz für jedes der virtuellen Dokumente in dem Suchindex.

24. Ein Verfahren zum Indizieren und Durchsuchen zeitlich gesteuerter Mediendateien nach Anspruch 22, wobei die Größen der Relevanz Messwerte eines Grades sind, bis zu dem das Relevanzintervall relevant für die wenigstens eine Informationsdarstellung ist.

25. Ein Verfahren zum Indizieren und Durchsuchen zeitlich gesteuerter Mediendateien nach Anspruch 1, weiterhin aufweisend den Schritt des Empfangens wenigstens einer Abfrageinformationsdarstellung (94a bis 94z).

26. Ein Verfahren zum Indizieren und Durchsuchen zeitlich gesteuerter Mediendateien nach Anspruch 25, weiterhin aufweisend die Schritte des Bestimmens, ob wenigstens zwei Abfrageinformationsdarstellungen eingegeben worden sind.

27. Ein Verfahren zum Indizieren und Durchsuchen zeitlich gesteuerter Mediendateien nach Anspruch 26, weiterhin aufweisend den Schritt des Bestimmens des Genauigkeitsgrades einer Suche durch Empfang einer Benutzerwahl (270) einer Zeit für die Suche.

28. Ein Verfahren zum Indizieren und Durchsuchen zeitlich gesteuerter Mediendateien nach Anspruch 27, weiterhin aufweisend den Schritt des Vergleichens wenigstens zweier Abfrageinformationsdarstellungen mit dem Suchindex, um den Schritt des Erzeugens wenigstens eines virtuellen Dokuments durchzuführen.

29. Ein Verfahren zum Indizieren und Durchsuchen zeitlich gesteuerter Mediendateien nach Anspruch 27, weiterhin aufweisend den Schritt des Vergleichens der wenigstens zwei Abfrageinformationsdarstellungen mit dem Rohdatenindex, um den Schritt des Erzeugens des wenigstens einen virtuellen Dokuments durchzuführen.

30. Ein Verfahren zum Indizieren und Durchsuchen zeitlich gesteuerter Mediendateien nach Anspruch 29, wobei Relevanzintervalle auf der Grundlage von Auftritten der wenigstens zwei Abfrageinformationsdarstellungen und des Überlappens der Auftritte der wenigstens zwei Abfrageinformationsdarstellungen bestimmt werden.

31. Ein Verfahren zum Indizieren und Durchsuchen zeitlich gesteuerter Mediendateien nach Anspruch 20, wobei die virtuellen Dokumente dargestellt werden und erweitert werden können, um eine vollständige zeitlich gesteuerte Mediendatei zu enthalten, aus der das virtuelle Dokument hervorgeht.

32. Ein Verfahren zum Indizieren und Durchsuchen zeitlich gesteuerter Mediendateien nach Anspruch 22, wobei eine Rangordnung der virtuellen Dokumente gemäß den Größen der Relevanz dargestellt wird.

33. Ein Verfahren zum Indizieren und Durchsuchen zeitlich gesteuerter Mediendateien nach Anspruch 1, weiterhin aufweisend den Schritt der Darstellung des wenigstens einen Relevanzintervalls an den Benutzer.

## Revendications

1. Procédé d'indexation et de recherche de fichiers média minutés comprenant les étapes suivantes :
l'extraction de données (22) à partir d'un fichier média minuté, lesdites données extraites comprenant au moins une représentation d'informations d'un mot ou d'une phrase ; et
le calcul (28) d'un intervalle de pertinence pour chacune de ladite au moins une représentation d'informations à partir desdites données extraites, **caractérisé en ce que** des points de début et de fin de l'intervalle de pertinence sont réglés en fonction de l'au moins une représentation d'informations.

2. Procédé d'indexation et de recherche de fichiers média minutés, selon la revendication 1, comprenant en outre la détermination d'une pluralité d'occurrences de la représentation d'informations dans le fichier média minuté, dans lequel le calcul comprend le calcul de l'intervalle de pertinence de manière que la pluralité d'occurrences soit à l'intérieur des points de début et de fin de l'intervalle de pertinence.

3. Procédé d'indexation et de recherche de fichiers média minutés, selon la revendication 1, comprenant en outre :
la détermination, à partir des données extraites, d'une pluralité d'occurrences de la représentation d'informations dans le fichier média minuté ; et
la détermination d'un premier sous-ensemble et d'un deuxième sous-ensemble différent de la pluralité d'occurrences,
dans lequel le calcul comprend le calcul de l'intervalle de pertinence de manière que le premier sous-ensemble de la pluralité d'occurrences, et pas le deuxième sous-ensemble de la pluralité d'occurrences, soit à l'intérieur des points de début et de fin de l'intervalle de pertinence.

4. Procédé d'indexation et de recherche de fichiers média minutés, selon la revendication 3, comprenant en outre le calcul d'un autre intervalle de pertinence ayant un point de début et un point de fin de manière que le deuxième sous-ensemble de la pluralité d'occurrences, et pas le premier sous-ensemble de la pluralité d'occurrences, soit à l'intérieur des points de début et de fin de l'autre intervalle de pertinence.

5. Procédé d'indexation et de recherche de fichiers média minutés, selon la revendication 3, dans lequel la détermination des premier et deuxième sous-ensembles comprend la détermination des premier et deuxième sous-ensembles sur la base d'une distribution temporelle des occurrences.

6. Procédé d'indexation et de recherche de fichiers média minutés, selon la revendication 1, dans lequel le calcul comprend le calcul de l'intervalle de pertinence pour avoir au moins une longueur minimale.

7. Procédé d'indexation et de recherche de fichiers média minutés, selon la revendication 1, dans lequel ledit calcul d'un intervalle de pertinence pour chacune de ladite au moins une représentation d'informations fait que des intervalles de pertinence pour des représentations d'informations différentes se chevauchent.

8. Procédé d'indexation et de recherche de fichiers média minutés, selon la revendication 1, dans lequel ladite étape d'extraction de données comprend l'étape d'exécution d'une reconnaissance optique de caractères (71) desdites données dans ledit fichier média minuté.

9. Procédé d'indexation et de recherche de fichiers média minutés, selon la revendication 1, dans lequel ladite étape d'extraction de données comprend l'extraction de données de code temporel (80) indiquant un temps pour chaque occurrence de ladite au moins une représentation d'informations.

10. Procédé d'indexation et de recherche de fichiers média minutés, selon la revendication 7, dans lequel ladite étape d'extraction de données comprend l'extraction d'une indication de la certitude d'un mot correct par ladite reconnaissance vocale (70).

11. Procédé d'indexation et de recherche de fichiers média minutés, selon la revendication 8, dans lequel ladite étape d'extraction de données comprend l'extraction d'une indication de la certitude d'un mot correct par ladite reconnaissance optique de caractères (71).

12. Procédé d'indexation et de recherche de fichiers média minutés, selon la revendication 1, dans lequel ladite étape d'extraction de données comprend l'extraction d'un numéro de phrase (80) pour chaque phrase contenant ladite au moins une représentation d'informations.

13. Procédé d'indexation et de recherche de fichiers média minutés, selon la revendication 7, dans lequel ladite étape d'extraction de données comprend l'extraction d'une identification d'un locuteur (205) de ladite au moins une représentation d'informations.

14. Procédé d'indexation et de recherche de fichiers média minutés, selon la revendication 1, dans lequel ladite étape d'extraction de données comprend l'étape d'exécution d'une analyse structurelle logique (76) desdites données et comprend l'extraction d'un intervalle de temps où un objet logique contenant ladite au moins une représentation d'informations est visible.

15. Procédé d'indexation et de recherche de fichiers média minutés, selon la revendication 1, comprenant en outre les étapes suivantes :
la création d'un index de données brutes (80) contenant lesdites données extraites ;
l'exécution d'un traitement du langage naturel (74) desdites données extraites ; et,
le stockage de résultats dudit traitement du langage naturel dans ledit index de données brutes.

16. Procédé d'indexation et de recherche de fichiers média minutés, selon la revendication 1, dans lequel chaque dit intervalle de pertinence est une section continue dudit fichier média minuté.

17. Procédé d'indexation et de recherche de fichiers média minutés, selon la revendication 1, comprenant en outre l'étape de calcul d'une grandeur de pertinence pour chaque dit intervalle de pertinence.

18. Procédé d'indexation et de recherche de fichiers média minutés, selon la revendication 1, comprenant en outre les étapes suivantes
le calcul (28) d'une grandeur de pertinence pour chaque dit intervalle de pertinence ; et
le stockage (30) de ladite grandeur de pertinence pour chaque dit intervalle de pertinence dans ledit index de recherche.

19. Procédé d'indexation et de recherche de fichiers média minutés, selon la revendication 17, dans lequel lesdites grandeurs de pertinence sont des mesures d'un degré auquel ledit intervalle de pertinence est pertinent pour ladite au moins une représentation d'informations.

20. Procédé d'indexation et de recherche de fichiers média minutés, selon la revendication 1, comprenant en outre l'étape de création d'au moins un document virtuel comprenant au moins un intervalle de pertinence transmis en continu réciproquement.

21. Procédé d'indexation et de recherche de fichiers média minutés, selon la revendication 20, comprenant en outre l'étape de création d'un index de recherche (86) contenant ledit au moins un document virtuel.

22. Procédé d'indexation et de recherche de fichiers média minutés, selon la revendication 20, comprenant en outre l'étape de calcul d'une grandeur de pertinence pour chacun dudit au moins un document virtuel.

23. Procédé d'indexation et de recherche de fichiers média minutés, selon la revendication 21, comprenant en outre les étapes suivantes
le calcul (128) d'une grandeur de pertinence pour chaque dit document virtuel ; et
le stockage de ladite grandeur de pertinence pour chaque dit document virtuel dans ledit index de recherche.

24. Procédé d'indexation et de recherche de fichiers média minutés, selon la revendication 22, dans lequel lesdites grandeurs de pertinence sont des mesures d'un degré auquel ledit intervalle de pertinence est pertinent pour ladite au moins une représentation d'informations.

25. Procédé d'indexation et de recherche de fichiers média minutés, selon la revendication 1, comprenant en outre l'étape de réception d'au moins une représentation d'informations d'interrogation (94a à 94z).

26. Procédé d'indexation et de recherche de fichiers média minutés, selon la revendication 25, comprenant en outre les étapes de détermination si au moins deux représentations d'informations d'interrogation ont été entrées.

27. Procédé d'indexation et de recherche de fichiers média minutés, selon la revendication 26, comprenant en outre l'étape de détermination d'un degré de précision d'une recherche en recevant une sélection d'utilisateur (270) d'un temps pour la recherche.

28. Procédé d'indexation et de recherche de fichiers média minutés, selon la revendication 27, comprenant en outre l'étape de comparaison desdites au moins deux représentations d'informations d'interrogation avec ledit index de recherche pour effectuer ladite étape de création d'au moins un document virtuel.

29. Procédé d'indexation et de recherche de fichiers média minutés, selon la revendication 27, comprenant en outre l'étape de comparaison desdites au moins deux représentations d'informations d'interrogation avec ledit index de données brutes pour effectuer ladite étape de création d'au moins un document virtuel.

30. Procédé d'indexation et de recherche de fichiers média minutés, selon la revendication 29, dans lequel des intervalles de pertinence sont déterminés sur la base d'occurrences desdites au moins deux représentations d'informations d'interrogation, et du chevauchement desdites occurrences desdites au moins deux représentations d'informations d'interrogation.

31. Procédé d'indexation et de recherche de fichiers média minutés, selon la revendication 20, dans lequel lesdits documents virtuels sont affichés, et peuvent être étendus pour comprendre un fichier média minuté complet dont provient ledit document virtuel.

32. Procédé d'indexation et de recherche de fichiers média minutés, selon la revendication 22, dans lequel un classement desdits documents virtuels en fonction desdites grandeurs de pertinence est affiché.

33. Procédé d'indexation et de recherche de fichiers média minutés, selon la revendication 1, comprenant en outre l'étape d'affichage d'au moins un intervalle de pertinence à l'utilisateur.
